# EUROPEAN PATENT APPLICATION

(11) **EP 3 719 306 A1**
(43) Date of publication of application: **07.10.2020**
(21) Application number: 19166603.1
(22) Date of filing: 01.04.2019
(51) Int. Cl.: F03D 13/20, F03D 17/00

(54) **WIND TURBINE WITH TOWER DEFLECTION DETECTION**

(71) Applicant: Siemens Gamesa Renewable Energy A/S, 7330 Brande (DK)
(72) Inventor: Nagel, Eirik, 24939 Flensburg (DE); Nieuwenhuizen, John, 8700 Horsens (DK)
(74) Representative: Aspacher, Karl-Georg

(57) **Abstract**

The present invention is directed to a wind turbine including a tower (1) and a tower deflection detection device. The tower deflection detection device comprises a transmitter (2) configured to transmit a first electromagnetic signal (100); a leaky feeder (3) having a plurality of apertures; a receiver (4) connected to the first leaky feeder (3) and configured to receive a second electromagnetic signal (200) from the first leaky feeder (3), the second electromagnetic signal (200) is a signal reflected from a reflection portion of the tower (1), when the first electromagnetic signal (100) impinges the reflection portion of the tower (1), and entered into the leaky feeder (3) through at least one of the plurality of apertures; and a processing unit connected to the receiver (4) and configured to receive the second electromagnetic signal (200) from the receiver (4), to analyse the received second electromagnetic signal (200) and to determine a deflection amount of the tower (1) based on the analysed second electromagnetic signal (200).

## Description

### Field of invention

The present invention relates to the technical field of wind turbines. In particular, the present invention is directed to a wind turbine including a tower and a tower deflection detection device.

### Art Background

In the above defined technical field, EP 2 864 632 A1 discloses a radar systems which measures a blade position based on the Doppler Effect. There are some other efforts to detect a tower deflection with acceleration sensors or other position sensors in a nacelle and/or the tower. And yet other efforts are made via a laser measurement from the outside. However, these measurements are sometimes burdensome and not accurate enough.

### Summary of the Invention

It is the object of the present invention to provide a wind turbine having a tower deflection detection device and a method of detecting a deflection of a tower of a wind turbine, where the accuracy can be improved by simple measures. This object is achieved by the subject matter according to the independent claims. Advantageous embodiments of the present invention are described by the dependent claims.

According to a first aspect of the present invention, a wind turbine includes a tower and a tower deflection detection device. The tower deflection detection device comprises a transmitter configured to transmit a first electromagnetic signal, a first leaky feeder having a plurality of apertures, a receiver connected to the first leaky feeder and configured to receive a second electromagnetic signal from the first leaky feeder, the second electromagnetic signal is a signal reflected from a reflection portion of the tower, when the first electromagnetic signal impinges the reflection portion of the tower, and entered into the leaky feeder through at least one of the plurality of apertures, and a processing unit connected to the receiver and configured to receive the second electromagnetic signal from the receiver, to analyse the received second electromagnetic signal and to determine a deflection amount of the tower based on the analysed second electromagnetic signal. Advantageously, the tower deflection detection device can readily be installed and is even adapted for retrofitting. The tower deflection detection device is moreover robust, sensitive and cheap. For example, the leaky feeder can be made of a leaky feeder cable which is a commercial available cable and easy to handle and install. There are no optical parts which are prone to pollute. Moreover, the monitoring of tower the deflection can have some positive impact for a closed loop control of the wind turbine.

Preferably, the transmitter is arranged inside a shell of the tower, wherein the shell functions as a waveguide of the first electromagnetic signal and as the reflection portion of the tower. Alternatively, the transmitter is arranged outside the tower and at least one reflection portion is connected to and arranged outside the tower.

Preferably, the first leaky feeder is a cable comprising the plurality of apertures configured to receive the second electromagnetic signal, each aperture having a predetermined distance from the receiver, and the processing unit is configured to calculate runtimes of the second electromagnetic signal between each aperture and the receiver and to determine the deflection amount of the tower based on the calculated runtimes. Thereby, the tower deflection can accurately be determined.

Preferably, the processing unit is configured to analyse the second electromagnetic signal by considering a signal damping within the first leaky feeder between each aperture and the receiver. Thereby, the tower deflection can accurately be determined and maxima and minima of the second electromagnetic signal can readily be identified.

Preferably, the transmitter and/or the receiver is integrated in the processing unit so that a compact and robust device is obtained.

Preferably, the wind turbine further comprises a second leaky feeder connected to the transmitter and configured to transmit the first electromagnetic signal via the transmitter.

Preferably, the wind turbine further comprises a plurality of leaky feeders, each leaky feeder is connected to the transmitter or includes an individual transmitter which is configured to transmit the first electromagnetic signal, and each leaky feeder is connected to the receiver or to an individual receiver which is configured to receive the second electromagnetic signal, wherein at least one of the leaky feeders serves as a transmitting leaky feeder and at least one other of the leaky feeders serves as a receiving leaky feeder. Thereby, the tower deflection can even more accurately be determined.

Preferably, the at least one leaky feeder either extends in a longitudinal axis of the tower or as an arc around a circumference of the tower.

Preferably, the first electromagnetic signal and the second electromagnetic signal are either radar signals or ultrasonic signals.

Preferably, the at least one leaky feeder is either a coaxial leaky cable or a leaky waveguide.

According to a second aspect of the present invention, a method of detecting a deflection of a tower of a wind turbine comprises the following steps: transmitting a first electromagnetic signal, reflecting the first electromagnetic signal from a reflection portion of the tower to obtain a second electromagnetic signal, entering the second electromagnetic signal in a first leaky feeder having a plurality of apertures, analysing the second electromagnetic signal, which entered the first leaky feeder, and determining a deflection amount of the tower based on the analysed second electromagnetic signal.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment to which the invention is not limited.
- Fig. 1: shows a side view of a tower of a wind turbine according to an embodiment of the present invention.
- Fig. 2: shows a schematic view explaining the principle of a leaky feeder according to an embodiment of the present invention.
- Fig. 3: shows a configuration of the leaky feeder and a processing unit according to an embodiment of the present invention.
- Fig. 4: shows a detail of the processing unit according to an embodiment of the present invention.
- Fig. 5: explains the calculation of runtimes of an electromagnetic signal within a leaky feeder according to an embodiment of the present invention.
- Fig. 6: shows a principle used in the determination of a deflection amount of the tower based on an electromagnetic signal within the leaky feeder according to an embodiment of the present invention.
- Fig. 7: shows a cross sectional view of a tower according to an embodiment of the present invention.
- Fig. 8: shows a longitudinal sectional view of the tower according to the embodiment of Fig. 7.
- Fig. 9: shows a longitudinal sectional view of a tower according to an embodiment of the present invention.
- Fig. 10: shows a longitudinal sectional view of a tower according to an embodiment of the present invention.
- Fig. 11: shows a longitudinal sectional view of a tower according to an embodiment of the present invention.
- Fig. 12: shows top cross sectional views of the tower according to the embodiment of Fig. 11.

### Detailed Description

The illustrations in the drawings are schematically. It is noted that in different figures, similar or identical elements are provided with the same reference signs.

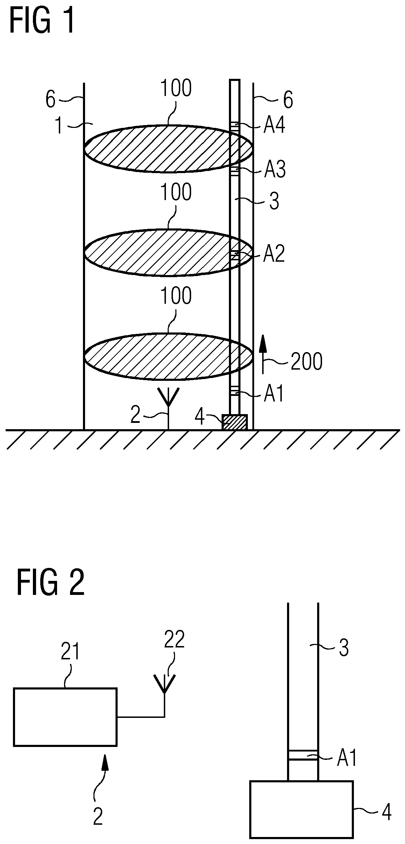

**Fig. 1** shows a side view of a tower 1 of a wind turbine according to an embodiment of the present invention. The wind turbine further comprises a nacelle (not shown) having at least one rotatable blade (not shown) and a tower deflection detection device.

The tower deflection detection device comprises a transmitter 2 configured to transmit a first electromagnetic signal 100 with a certain frequency, a first leaky feeder 3 having a plurality of apertures A₁, A₂, A₃, A₄ and a receiver 4 connected to the first leaky feeder 3. The transmitter 2 can be placed in a radial centre of the tower 1, and the first leaky feeder 3 can eccentrically be placed with respect to the radial centre of the tower 1. Preferably, the first leaky feeder 3 is arranged adjacent and inside a shell 6 of the tower 1. In the embodiment of Fig. 1, both of the transmitter 2 and the first leaky feeder 3 are inside the shell 6 of the tower 1. The transmitter 2 can be placed in the longitudinal direction of the tower 1 at the bottom, the top or the centre of the tower 1. The first electromagnetic signal 100 can be a standing or stationary electromagnetic wave 100. In Fig. 1, circles indicate maxima of the stationary electromagnetic wave 100.

The receiver 4 is configured to receive a second electromagnetic signal 200 from the first leaky feeder 3. The second electromagnetic signal 200, which can be an electromagnetic wave, is a signal which has been reflected from a reflection portion of the tower 1, when the first electromagnetic signal 100 impinges the reflection portion of the tower 1, and which has been entered into the leaky feeder 3 through at least one aperture of the plurality of apertures A1, A2, A3, A4.

In the embodiment of Fig. 1, the transmitter 2 is arranged inside the shell 6 of the tower 1, wherein the shell 6 functions as a waveguide of the first electromagnetic signal 100 and as the reflection portion of the tower 1.

**Fig. 2** shows a schematic view explaining the principle of a leaky feeder according to an embodiment of the present invention. The transmitter 2 comprises a transmitter control unit 21 and an antenna 22, by which the first electromagnetic signal 100 is transmitted under control of the transmitter control unit 21. The first leaky feeder 3 can be an elongated component which receives an electromagnetic wave or leaks an electromagnetic wave which is transmitted along the component. The leaky feeder 3 may be constituted by a leaky coaxial cable or a leaky waveguide or a leaky stripline.

The apertures A1, A2, A3, A4 of the first leaky feeder 3 can be formed as slots which are, according to possible embodiments, regularly distributed along the length of the first leaky feeder 3. According to other possible embodiments of the present invention, the first leaky feeder 3 is a normal coaxial cable with low optical coverage of the outside conductor (mesh or slots/apertures), which also receives or leaks electromagnetic waves.

The first leaky feeder 3 may be provided with a heating system (not shown) in case severe over icing conditions are possible. Heating may be provided by air flowing between in and outside conductor or by electrical current which runs in an inner or outer conductor of the first leaky feeder 3.

The first electromagnetic signal 100 may be, according to possible embodiments, a radar signal or an ultrasonic signal. In cases where the first electromagnetic signal 100 is a radar signal or an ultrasonic signal, the first leaky feeder 3 is preferably configured as a coaxial leaky cable. According to other embodiments, particularly where the first electromagnetic signal 100 is of higher frequency, the first leaky feeder 3 is preferably configured as a leaky waveguide. In general, according to the different embodiments of the present invention, the first electromagnetic signal 100 may be of any frequency, provided that it can be transmitted to and be reflected by the reflection portion.

When the first electromagnetic signal 100 impinges the reflection portion, the reflected second electromagnetic signal 200 is transmitted towards the first leaky feeder 3. The plurality of apertures A1, A2, A3, A4 of the first leaky feeder 3 allow the second electromagnetic signal 200 to enter the first leaky feeder 3 towards the receiver 4.

The tower deflection detection device further comprises a processing unit 5 configured to analyse the received second electromagnetic signal 200 and to determine a deflection or bending amount of the tower 1 based on the analysed second electromagnetic signal 200.

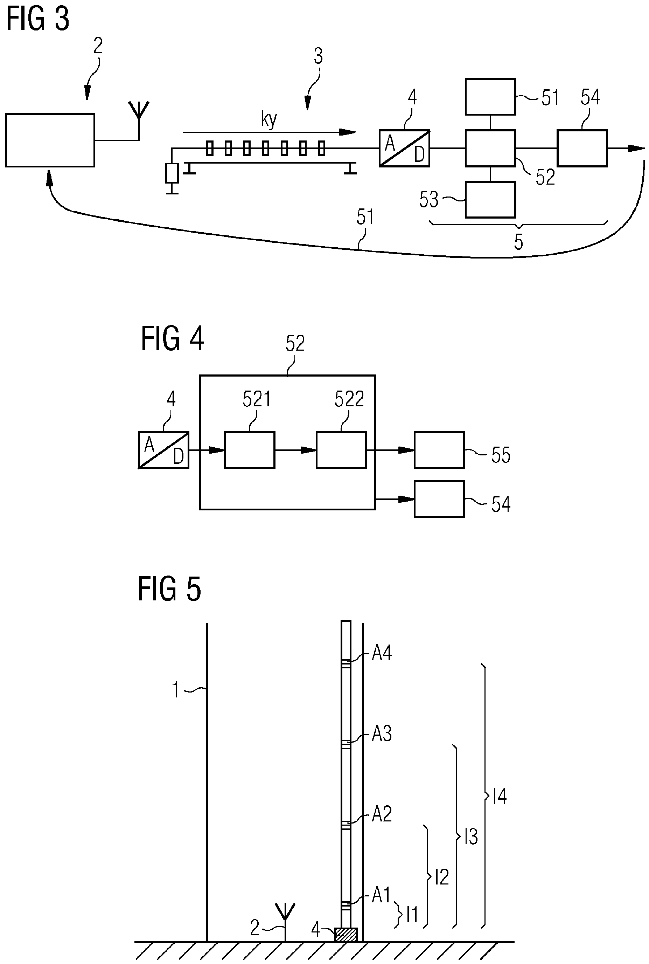

**Fig. 3** shows a configuration of the leaky feeder 3 and the processing unit 5 according to an embodiment of the present invention. The receiver 4 is embodied as an Analog-to-Digital-converter (A/D) 4. If a high-speed Analog-to-Digital-converter (A/D) 4 is used, an additional traditional RF module is not necessary, and additional filtering can be reduced. However, it does not exclude the traditional topology of a radar system. The analog second electromagnetic signal 200 is received from the leaky feeder 3 and converted to an digital signal by the A/D-converter 4. The digital signal is transmitted to a central processing unit (CPU) 52. The CPU 52 actually analyses the received second electromagnetic signal 200 and determines the deflection or bending amount of the tower 1 based on the analysed second electromagnetic signal 200. The CPU 52 is further connected to storage means such as a RAM 51 and a hard disk (HDD) 53. The CPU 52 is further connected to a communication unit 54 by which the determined deflection or bending amount can be transmitted to a control and/or monitoring system (not shown). Moreover, the transmitter control unit 21 can be controlled by the processing unit 5 by a signal line 51, for example based on the determined deflection or bending amount. Preferably, the communication unit 54 communicates via fibre optics or wireless cables.

**Fig. 4** shows a detail of the processing unit 5 according to another embodiment of the present invention. The CPU 52 comprises a filter 521, which filters the digital signal from the AD-converter 4, and a Fast-Fourier-Transformation unit (FFT unit) 522 which performs for example one or two fast Fourier-transformation operations of the filtered signal. The CPU 52 is further connected to the communication unit 54 and to a storage means 55.

It is possible in all embodiments to implement a software defined radar or a software defined signal generator, where radar modules - amongst others the transmitter 2 - are software configurable.

It is further possible in all embodiments to implement, in addition or as an alternative to the FFT unit 522, a signal processing unit for frequency domain and/or time domain analyses.

**Fig. 5** explains the calculation of runtimes of the second electromagnetic signal 200 within the first leaky feeder 3 according to an embodiment of the present invention. The distance between the apertures A₁, A₂, A₃, A₄ to the receiver 4 are l₁, l₂, l₃, l₄, respectively, wherein l₁ < l₂ < l₃ < l₄. The runtimes tₙ of the second electromagnetic signal 200 within the first leaky feeder 3 can be calculated as tₙ = lₙ / (c₀ · v_{f}), n = 1..4, wherein c₀ is the speed of light and v_{f} is a velocity factor which usually is in a range between 0.66 and 0.88. A runtime tₙ can be for example a time length which is needed for a maximum or a minimum of the second electromagnetic signal 200 to propagate in the leaky feeder 3 from the aperture Aₙ to the receiver 4. The processing unit 5 is configured to calculate runtimes of the second electromagnetic signal 200 between each aperture A₁, A₂, A₃, A₄ and the receiver 4 and to determine the deflection amount of the tower based on the calculated runtimes tₙ.

The processing unit 5 can further be configured to analyse the second electromagnetic signal 200 by considering a signal damping within the first leaky feeder 3 between each aperture A₁, A₂, A₃, A₄ and the receiver 4. The damping or attenuation aₗₙ can be calculated as aₗₙ = lₙ · a_{cable}, n = 1..4, wherein lₙ is the distance between the aperture Aₙ and the receiver 4 and a_{cable} is the specific cable damping constant.

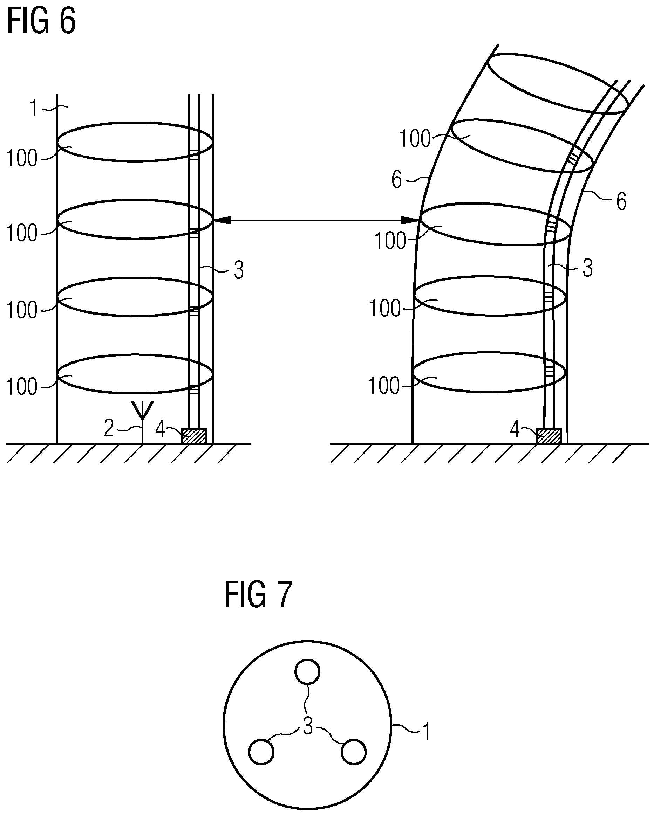

**Fig. 6** shows a principle used in the determination of a bending amount of the tower 1 based on the second electromagnetic signal 200 within the first leaky feeder 3 according to an embodiment of the present invention. The transmitter 2 is arranged inside the shell 6 of the tower 1, wherein the shell 6 functions as a waveguide of the first electromagnetic signal 100 and as the reflection portion of the tower 1. The first electromagnetic signal 100 may have the shape of a standing or stationary electromagnetic wave 100. In Fig. 6, the circles indicate maxima of the stationary electromagnetic wave 100.

In case of tower bending or deflection, while the tower 1 is working as a waveguide for the first electromagnetic signal 100, also the distances between two minima or two maxima of the second electromagnetic signal 200 are changed. This results to a variation of the second electromagnetic signal 200 which is received by the receiver 4. This variation of the second electromagnetic signal 200 is analysed to determine the deflection or bending amount of the tower 1. In the example of Fig. 6, the tower 1 is bent rightwards so that the shell 6 at the right-hand side is compressed, whereas the shell 6 at the left-hand side is extended. In a cross sectional view of the tower 1, the first leaky feeder 3 is eccentrically arranged at the right-hand side of the tower 1 in Fig. 6. Consequently, the maxima and the minima of the second electromagnetic signal 200 are shifted with respect to the apertures A₁, A₂, A₃, A₄ of the first leaky feeder 3.

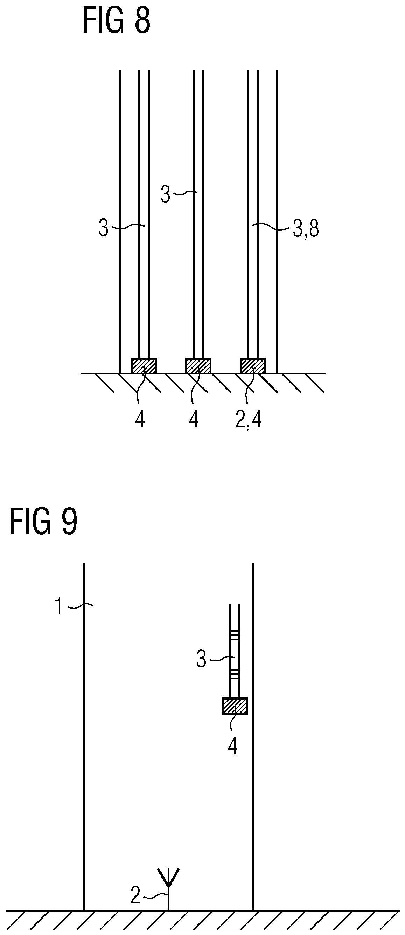

**Fig. 7** shows a cross sectional view of a tower 1 according to an embodiment of the present invention, and **Fig. 8** shows a longitudinal sectional view of the tower 1 according to the embodiment of the present invention. The tower 1 is provided with three leaky feeders 3. Each leaky feeder 3 is connected to an individual receiver 4. Only one of the leaky feeders 3 (the right one in Fig. 8) is provided with the transmitter 2. This leaky feeder 3 at the right-hand side can also be designated as a second leaky feeder 8 which is connected to the transmitter 2 and configured to transmit the first electromagnetic signal 100 via the transmitter 2. The transmitter 2 and/or the receiver 4 can be integrated in the processing unit 5.

Alternatively, there can be provided a plurality of leaky feeders 3, 8, each leaky feeder 3, 8 is connected to the transmitter 2 or includes an individual transmitter 2 which is configured to transmit the first electromagnetic signal 100, and each leaky feeder 3, 8 is connected to the receiver 4 or to an individual receiver 4 which is configured to receive the second electromagnetic signal 200. At least one leaky feeder 3, 8 serves as a transmitting leaky feeder 8 and at least one other leaky feeder 3, 8 serves as a receiving leaky feeder 3. The roles of the transmitting leaky feeder 8 and of the receiving leaky feeder 3 can be changed among the plurality of leaky feeders 3, 8. For example, the role between transmitting and receiving leaky feeders 3 can periodically be changed.

**Fig. 9** shows a longitudinal sectional view of a tower 1 according to an embodiment of the present invention. The leaky feeder 3 is not placed along the entire length of the tower 1, but in a segment along the entire the length of the tower 1.

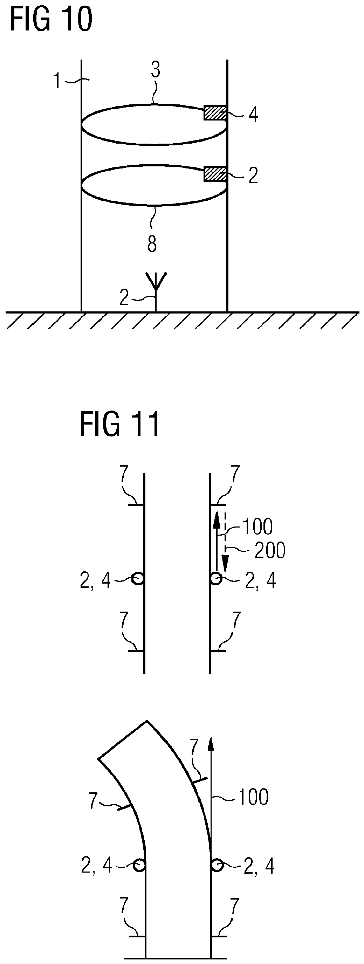

**Fig.10** shows a longitudinal sectional view of a tower according to an embodiment of the present invention. The first and second leaky feeders 3, 8 extend as an arc around a circumference of the tower 1. In contrast, the leaky feeders 3, 8 of the embodiments in the preceding embodiments (for example in Fig. 8) extend in a longitudinal axis of the tower 1.

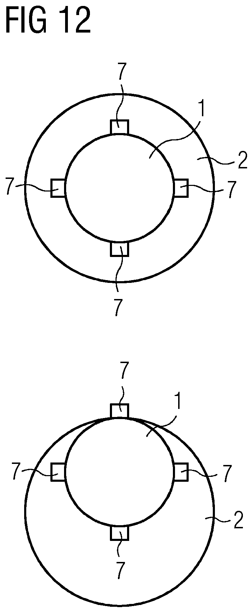

**Fig. 11** shows a longitudinal sectional view of a tower according to an embodiment of the present invention, and **Fig. 12** shows top cross sectional views of the tower according to the embodiment of Fig. 11. The transmitter 2 and the receiver 4 are integrated in a single leaky feeder 2, 4. The leaky feeder 2, 4 is arranged outside the tower 1, and at least one reflection portion 7 is connected to and arranged outside the tower 1. If the tower 1 is not bent or deflected, the first electromagnetic signal 100 sent from the leaky feeder 2, 4 impinges the reflection portion 7 of the tower 1 and is completely or nearly completely reflected as the second electromagnetic signal 200 back to the leaky feeder 2, 4.

However, in case of tower bending or deflection, the first electromagnetic signal 100 sent from the leaky feeder 2, 4 does not impinge at least some of the reflection portions 7 of the tower 1 and is not or not completely reflected as the second electromagnetic signal 200 to the leaky feeder 2, 4. Based on this variation, the processing unit is able to analyse the received second electromagnetic signal 200 and to determine a deflection amount of the tower 1 based on the analysed second electromagnetic signal 200.

Amplitude or phase information of the second electromagnetic signal 200 can be analysed. If one or more reflection portions 7 are moved out of the signal path, the relative amplitudes can be analysed crosswise in order to determine a direction in which the tower 1 is bent. For example in Fig. 12, the reflection portion 7 at the top of Fig. 12 is moved out of the signal path. Thus, it can be determined that the tower 1 was bent in a direction to the top of Fig. 12.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. A wind turbine including a tower (1) and a tower deflection detection device, the tower deflection detection device comprising:
- a transmitter (2) configured to transmit a first electromagnetic signal (100);
- a first leaky feeder (3) having a plurality of apertures (A_{1,} A₂, A₃, A₄);
- a receiver (4) connected to the first leaky feeder (3) and configured to receive a second electromagnetic signal (200) from the first leaky feeder (3), the second electromagnetic signal (200) is a signal reflected from a reflection portion of the tower (1), when the first electromagnetic signal (100) impinges the reflection portion of the tower (1), and entered into the leaky feeder (3) through at least one of the plurality of apertures (A1, A2, A3, A4); and
- a processing unit (5) connected to the receiver (4) and configured to receive the second electromagnetic signal (200) from the receiver (4), to analyse the received second electromagnetic signal (200) and to determine a deflection amount of the tower (1) based on the analysed second electromagnetic signal (200).

2. The wind turbine according to claim 1, wherein
the transmitter (2) is arranged inside a shell (6) of the tower (1), wherein the shell (6) functions as a waveguide of the first electromagnetic signal (100) and as the reflection portion of the tower (1).

3. The wind turbine according to claim 1, wherein
the transmitter (2) is arranged outside the tower (1) and at least one reflection portion (7) is connected to and arranged outside the tower (1).

4. The wind turbine according to any one of the preceding claims, wherein
the first leaky feeder (3) is a cable comprising the plurality of apertures (A_{1,} A₂, A₃, A₄) configured to receive the second electromagnetic signal (200), each aperture (A_{1,} A₂, A₃, A₄) having a predetermined distance (l₁, l₂, l₃, l₄) from the receiver (4); and
the processing unit (5) is configured to calculate runtimes (tₙ) of the second electromagnetic signal (200) between each aperture (A_{1,} A₂, A₃, A₄) and the receiver (4) and to determine the deflection amount of the tower (1) based on the calculated runtimes (tₙ).

5. The wind turbine according to any one of the preceding claims, wherein
the processing unit (5) is configured to analyse the second electromagnetic signal (200) by considering a signal damping (aₙ) within the first leaky feeder (3) between each aperture (A_{1,} A₂, A₃, A₄) and the receiver (4) .

6. The wind turbine according to any one of the preceding claims, wherein
the transmitter (2) and/or the receiver (4) is integrated in the processing unit (5).

7. The wind turbine according to any one of the preceding claims, further comprising
a second leaky feeder (8) connected to the transmitter (2) and configured to transmit the first electromagnetic signal (100) via the transmitter (2).

8. The wind turbine according to any one of the preceding claims, comprising:
a plurality of leaky feeders (3, 8), each leaky feeder (3, 8) is connected to the transmitter (2) or includes an individual transmitter (2) which is configured to transmit the first electromagnetic signal (100), and each leaky feeder (3, 8) is connected to the receiver (4) or to an individual receiver (4) which is configured to receive the second electromagnetic signal (200), wherein
at least one of the leaky feeders (3, 8) serves as a transmitting leaky feeder (8) and at least one other of the leaky feeders (3, 8) serves as a receiving leaky feeder (3).

9. The wind turbine according to any of the previous claims, wherein the at least one leaky feeder (3, 8) either extends in a longitudinal axis of the tower (1) or as an arc around a circumference of the tower (1).

10. The wind turbine according to any of the previous claims, wherein the first electromagnetic signal (100) and the second electromagnetic signal (200) are either radar signals or ultrasonic signals.

11. The wind turbine according to any of the previous claims, wherein the at least one leaky feeder (3, 8) is either a coaxial leaky cable or a leaky waveguide.

12. A method of detecting a deflection of a tower (1) of a wind turbine, the method comprising the following steps:
- transmitting a first electromagnetic signal (100);
- reflecting the first electromagnetic signal (100) from a reflection portion of the tower (1) to obtain a second electromagnetic signal (200);
- entering the second electromagnetic signal (200) in a first leaky feeder (3) having a plurality of apertures (A_{1,} A₂, A₃, A₄); and
- analysing the second electromagnetic signal (200) having entered the first leaky feeder (3) and determining a deflection amount of the tower (1) based on the analysed second electromagnetic signal (200).
